# FASCICULE DE BREVET EUROPEEN

(11) **EP 3 390 109 B1**
(45) Date de publication et mention de la délivrance du brevet: **02.10.2019**
(21) Numéro de dépôt: 16825514.9
(22) Date de dépôt: 14.12.2016
(51) Int. Cl.: B60C 11/03

(54) **BANDE DE ROULEMENT DE PNEUMATIQUE POUR VEHICULE A USAGE AGRICOLE**
REIFENLAUFFLÄCHE FÜR EIN LANDWIRTSCHAFTLICHES FAHRZEUG
TYRE TREAD FOR AN AGRICULTURAL VEHICLE

(30) Priorité: 15.12.2015 FR 1562380
(43) Date de publication de la demande: 24.10.2018
(73) Titulaire: Compagnie Générale des Etablissements Michelin, 63000 Clermont-Ferrand (FR)
(72) Inventeur: VERVAET, Patrick, 63040 Clermont-Ferrand Cedex 9 (FR); MATYAS, Istvan, 63040 Clermont-Ferrand Cedex 9 (FR); CHARASSON, Bruno, 63040 Clermont-Ferrand Cedex 9 (FR); GANDILLET, Marc, 63040 Clermont-Ferrand Cedex 9 (FR); ROPARS, Olivier, 63040 Clermont-Ferrand Cedex 9 (FR)
(74) Mandataire: Millanvois, Patrick Jacques Jean
(86) Numéro de dépôt international: PCT/FR2016/053426
(87) Numéro de publication internationale: WO 2017/103477

(56) Documents cités:
- US-A- 4 480 672
- US-A- 5 058 643
- US-A1- 2005 167 020
- US-A1- 2013 008 575

## Description

La présente invention a pour objet un pneumatique pour véhicule agricole, tel qu'un tracteur ou un véhicule agro-industriel. Elle a plus particulièrement pour objet un pneumatique agricole, destiné à être soumis à un couple, et concerne plus précisément sa bande de roulement, destinée à entrer à contact avec un sol par l'intermédiaire d'une surface de roulement.
US2013/0008575 A décrit un pneumatique pour véhicule à usage agricole dont la bande de roulement présente des barrettes centrales en forme de chevrons ainsi que des barrettes latérales rectilignes.

Un pneumatique agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique agricole, et en particulier sa bande de roulement, doit présenter un compromis de performances variable selon l'usage. Lors d'un usage en champ, les performances visées sont essentiellement une capacité de traction efficace, un faible compactage du sol et une faible résistance à l'avancement. Lors d'un usage sur route, les performances visées sont une capacité de vitesse efficace, une faible résistance au roulement et un bon comportement routier.

Il est connu qu'un levier essentiel de gestion du compromis de performances d'un pneumatique agricole, soumis à une charge donnée, est sa pression de gonflage.

Dans le cas d'un usage en champ, sur un sol plus ou moins meuble, il est recommandé de gonfler le pneumatique à la pression la plus basse possible sans pénaliser son endurance. En effet, il est connu que, plus la pression de gonflage est basse, plus le compactage du sol au passage du véhicule agricole est faible, ce qui favorise le rendement agronomique des cultures. De plus, une pression de gonflage basse diminue l'orniérage, ce qui est favorable à la résistance à l'avancement du véhicule.

Dans le cas d'un usage sur chemin ou sur route, sur un sol dur, lors des déplacements du véhicule agricole en dehors de sa zone de travail, ou lors du transport de produits entrants ou sortants de l'exploitation agricole, une plus haute pression est nécessaire pour garantir, en particulier, un bon comportement routier et une faible résistance au roulement.

Sur un plan normatif, le niveau de pression recommandé est défini, par exemple, par les normes de la « European Technical Rim and Tyre Organization » (ETRTO) qui définissent des courbes exprimant la charge maximale et la pression recommandée, appliquées au pneumatique, en fonction de la vitesse du véhicule. A titre d'exemples, pour une charge donnée, certains pneumatiques agricoles peuvent fonctionner à des pressions inférieures à 1 bar alors que d'autres pneumatiques de même dimension fonctionnent au-delà de 1,6 bars. Ces différences de points de fonctionnement sont normées selon des indices de surcharge (IF ou VF, selon les normes ETRTO).

Une tendance actuelle forte dans la définition des véhicules agricoles de type tracteur agricole est d'intégrer au fonctionnement de ces tracteurs agricoles un système dynamique de gestion de la pression de gonflage des pneumatiques, appelé couramment système de télégonflage, permettant d'adapter la pression de gonflage des pneumatiques à l'usage.

Dans un mode de fonctionnement à pression régulée au cours de l'usage, on alternera ainsi un fonctionnement en champ, à basse pression, et un fonctionnement sur route, à plus haute pression. Il est connu qu'à basse pression, la surface de contact de la bande de roulement du pneumatique avec le sol est plutôt large et que la charge appliquée au pneumatique est reprise essentiellement par les bords ou parties latérales de la bande de roulement, alors qu'à plus haute pression, la surface de contact de la bande de roulement du pneumatique avec le sol est plutôt étroite et que la charge appliquée au pneumatique est reprise essentiellement par le centre ou partie médiane de la bande de roulement. En d'autres termes, à basse pression, les pressions de contact sont maximales dans les parties latérales de la bande de roulement, alors qu'à plus haute pression, les pressions de contact sont maximales dans la partie médiane de la bande de roulement.

Dans ce qui suit et par définition, les directions circonférentielle, axiale et radiale désignent respectivement une direction tangente à la surface de roulement du pneumatique et orientée selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche », respectivement « plus éloigné de l'axe de rotation du pneumatique». Par «axialement intérieur », respectivement « axialement extérieur», on entend «plus proche », respectivement « plus éloigné du plan équatorial du pneumatique», le plan équatorial du pneumatique étant le plan passant par le milieu de la surface de roulement du pneumatique et perpendiculaire à l'axe de rotation du pneumatique.

La bande de roulement d'un pneumatique pour tracteur agricole comprend généralement une pluralité de barrettes. Les barrettes sont des éléments en relief par rapport à une surface de révolution autour de l'axe de rotation du pneumatique, appelée surface de fond.

Une barrette a généralement une forme globalement parallélépipédique allongée, constituée d'au moins une portion rectiligne ou curviligne, et est séparée des barrettes adjacentes par des rainures. Une barrette peut être constituée d'une succession de portions rectilignes, telle que décrite, par exemple, dans les documents US 3603370, US 4383567, EP 795427 ou avoir une forme curviligne, telle que présentée dans les documents US 4446902, EP 903249, EP 1831034.

Une barrette a usuellement, mais pas obligatoirement, un angle d'inclinaison moyen, par rapport à la direction circonférentielle, proche de 45°. En effet, cet angle d'inclinaison moyen permet en particulier un bon compromis entre la traction en champ et le confort vibratoire. La traction en champ est d'autant meilleure que la barrette est axiale, c'est-à-dire que son angle d'inclinaison moyen, par rapport à la direction circonférentielle, est proche de 90°, alors que le confort vibratoire est d'autant meilleur que la barrette est circonférentielle, c'est-à-dire que son angle d'inclinaison moyen, par rapport à la direction circonférentielle, est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement axiale à l'épaule et sensiblement circonférentielle au milieu de la bande de roulement.

La bande de roulement d'un pneumatique pour tracteur agricole comprend généralement deux rangées de barrettes telles que précédemment décrites et présentant une symétrie par rapport au plan équatorial du pneumatique. Cette distribution de barrettes inclinées par rapport à la direction circonférentielle confère à la bande de roulement une forme en V couramment dénommée motif en chevrons. Le plus souvent il existe un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

De façon générale, l'homme du métier définit la bande de roulement d'un pneumatique à l'aide de deux caractéristiques de conception importantes : la largeur totale et le taux d'entaillement volumique de la bande de roulement.

La largeur totale de la bande de roulement est la distance axiale entre les extrémités axiales de la surface de roulement, symétriques par rapport au plan équatorial du pneumatique. Sur un plan pratique, une extrémité axiale de la surface de roulement ne correspond pas nécessairement à un point clairement défini. Sachant que la bande de roulement est délimitée extérieurement, d'une part, par la surface de roulement et, d'autre part, par deux surfaces de raccordement avec deux flancs reliant ladite bande de roulement à deux bourrelets destinés à assurer la liaison avec une jante de montage, une extrémité axiale peut être alors définie mathématiquement comme la projection orthogonale, sur la bande de roulement, d'un point théorique d'intersection entre la tangente à la surface de roulement, dans la zone d'extrémité axiale de la surface de roulement, et la tangente à la surface de raccordement, dans la zone d'extrémité radialement extérieure de la surface de raccordement. La largeur totale de la bande de roulement correspond sensiblement à la largeur axiale de la surface de contact lorsque que le pneumatique est soumis aux conditions de charge et de pression recommandées.

Le taux d'entaillement volumique de la bande de roulement est défini comme le rapport entre le volume total des rainures séparant les éléments en relief et le volume total de la bande de roulement supposée non entaillée, radialement compris entre la surface de fond et la surface de roulement. La surface de fond est définie comme la surface translatée de la surface de roulement, radialement vers l'intérieur, sur une distance radiale correspondant à la profondeur radiale maximale des rainures, appelée épaisseur radiale Hₘₐₓ de la bande de roulement. Le taux d'entaillement volumique définit ainsi implicitement le volume de matériau élastomérique constitutif de la bande de roulement destiné à être usé. Il a également une incidence directe sur la surface de contact de la bande de roulement avec le sol et, par conséquent, sur les pressions de contact avec le sol qui conditionnent l'usure du pneumatique.

Les caractéristiques de conception des bandes de roulement à barrettes de l'état de la technique ne permettent pas aujourd'hui d'obtenir un compromis satisfaisant entre les performances en usage en champ, telles que la capacité de traction et la résistance à l'avancement, et les performances en usage sur route, telles que la durée de vie sur usure et la résistance au roulement.

Les inventeurs se sont donnés pour objectif d'améliorer le compromis entre, d'une part, la capacité de traction et la résistance à l'avancement, en usage en champ, et, d'autre part, la durée de vie sur usure et la résistance au roulement, en usage sur route.

Ce but a été atteint selon l'invention par un pneumatique pour véhicule à usage agricole comprenant une bande de roulement, destinée à entrer en contact avec un sol par l'intermédiaire d'une surface de roulement:
- la bande de roulement comprenant des éléments en relief séparés au moins en partie les uns des autres par des rainures et s'étendant radialement vers l'extérieur à partir d'une surface de fond jusqu'à la surface de roulement sur une hauteur radiale H au moins égale à 30 mm et au plus égale à l'épaisseur radiale Hₘₐₓ de la bande de roulement,
- la bande de roulement ayant une largeur totale W_{T} mesurée entre deux extrémités axiales de la surface de roulement,
- la bande de roulement comprenant une partie médiane, symétrique par rapport à un plan équatorial et ayant une largeur médiane W_{C} au moins égale à 5% et au plus égale à 25% de la largeur totale W_{T}, et deux parties latérales s'étendant chacune axialement vers l'intérieur à partir d'une extrémité axiale de la surface de roulement et ayant chacune une largeur latérale W_{S} au moins égale à 5% et au plus égale à 20% de la largeur totale W_{T},
- la partie médiane comprenant une surface radialement extérieure ayant, dans un plan méridien, un profil méridien ayant un point milieu et un rayon de courbure R_{C} en son point milieu, et chaque partie latérale comprenant une surface radialement extérieure ayant un profil méridien ayant un point milieu et un rayon de courbure R_{S} en son point milieu,
- le profil méridien de la surface radialement extérieure de chaque partie latérale étant radialement intérieur au profil méridien de la surface radialement extérieure de la partie médiane
- et la distance radiale entre le point milieu du profil méridien de la surface radialement extérieure de chaque partie latérale et le profil méridien de la surface radialement extérieure de la partie médiane étant au moins égale à 0.5 fois l'épaisseur radiale Hₘₐₓ de la bande de roulement.

La partie médiane n'est pas nécessairement en contact avec chaque partie latérale dont elle peut être séparée par une partie intermédiaire ou de transition. Par surface radialement extérieure de la partie médiane ou de chaque partie latérale, on entend une surface enveloppant les éléments en relief des parties concernées, sans prise en compte des rainures séparant lesdits éléments en relief. Par profil méridien d'une surface radialement extérieure, on entend la courbe d'intersection de ladite surface radialement extérieure avec tout plan méridien contenant l'axe de révolution du pneumatique. Le rayon de courbure en un point milieu du profil méridien, s'étendant axialement entre un premier et un deuxième point limite, d'une surface radialement extérieure est le rayon du cercle passant par le point milieu et les deux points limites du profil méridien : on l'appelle aussi rayon de courbure moyen. Un profil méridien est un profil méridien gonflé, défini sur un pneumatique monté sur sa jante recommandée et gonflé à sa pression recommandée telle que définie, par exemple, par la norme ETRO ou la norme ISO 4251, le pneumatique n'étant pas écrasé, c'est-à-dire soumis à aucune charge radiale.

Selon une première caractéristique essentielle de l'invention, le profil méridien de la surface radialement extérieure de chaque partie latérale est radialement intérieur au profil méridien de la surface radialement extérieure de la partie médiane. En d'autres termes, le profil méridien de la surface radialement extérieure de chaque partie latérale est décalé radialement vers l'intérieur, par rapport au profil méridien de la surface radialement extérieure de la partie médiane : ce qui crée une dépression de chaque partie latérale par rapport à la partie médiane.

Selon une deuxième caractéristique essentielle de l'invention, la distance radiale entre le point milieu du profil méridien de la surface radialement extérieure de chaque partie latérale et le profil méridien de la surface radialement extérieure de la partie médiane est au moins égale à 0.5 fois l'épaisseur radiale Hₘₐₓ de la bande de roulement. Cette distance radiale quantifie le décalage radial entres les profils méridiens respectifs des surfaces radialement extérieures de la partie médiane et de chaque partie latérale.

La combinaison des caractéristiques essentielles de l'invention permet en particulier d'optimiser le contact de la bande de roulement avec un sol rigide de type route à haute et à basse pression.

A haute pression, c'est-à-dire à une pression de gonflage au moins égale à 2/3 de la pression recommandée, la surface radialement extérieure de la partie médiane est en contact total avec le sol, alors que les surfaces radialement extérieures des parties latérales ne sont pas en contact avec le sol, les surfaces radialement extérieures des parties intermédiaires entre chaque partie latérale et la partie médiane étant en contact partiel avec le sol. En d'autres termes, la bande de roulement est en contact partiel avec le sol, par sa partie médiane essentiellement, et au moins partiellement par ses parties intermédiaires. A titre d'exemple, pour un pneumatique dont la pression recommandée est égale à 2.4 bars, le contact partiel est obtenu pour une pression au moins égale à 1.6 bars.

A basse pression, c'est-à-dire à une pression de gonflage au plus égale à 1/2 de la pression recommandée, les surfaces radialement extérieures respectives de la partie médiane, des parties intermédiaires et des parties latérales sont en contact total avec le sol. En d'autres termes, la bande de roulement est en contact total avec le sol. A titre d'exemple, pour un pneumatique dont la pression recommandée est égale à 2.4 bars, le contact total est obtenu pour une pression au plus égale à 1.2 bars.

Lors d'un usage routier à haute pression, par rapport à un pneumatique de l'état de la technique comprenant une bande de roulement à barrettes ayant un profil méridien classique, sans dépression au niveau des parties latérales, le port de la charge est essentiellement assuré par la partie médiane de la bande de roulement. En particulier dans le cas où la partie médiane est quasi continue, la durée de vie en usure sur route est augmentée et la résistance au roulement est diminuée. De plus le confort routier est amélioré, par rapport à une bande de roulement à barrettes induisant des vibrations lors de chaque entrée ou chaque sortie d'une barrette dans l'aire de contact.

Lors d'un usage en champ à basse pression, par rapport à un pneumatique de l'état de la technique, la capacité de traction sur sol agricole meuble ou rigide est augmentée grâce à l'augmentation de la largeur de la bande de roulement. De plus, l'augmentation de la largeur de la bande de roulement permet une diminution du tassement des sols agricoles et, pour un sol meuble, une diminution de la résistance à l'avancement.

Sur un plan pratique, le passage automatique d'un fonctionnement à haute pression à un fonctionnement à basse pression et réciproquement peut être avantageusement réalisé par un système de télégonflage embarqué sur le véhicule agricole permettant la gestion des pressions de gonflage des divers pneumatiques équipant le véhicule.

Avantageusement, la distance radiale entre le point milieu du profil méridien de la surface radialement extérieure de chaque partie latérale et le profil méridien de la surface radialement extérieure de la partie médiane est au moins égale à 0.7 fois l'épaisseur radiale Hₘₐₓ de la bande de roulement. Un décalage radial plus important accentue les effets techniques précédemment décrits.

Egalement avantageusement le rayon de courbure R_{C} au point milieu du profil méridien de la surface radialement extérieure de la partie médiane est au moins égal au rayon de courbure R_{S} au point milieu du profil méridien de la surface radialement extérieure de chaque partie latérale. Un tel ratio entre ces rayons de courbure garantit un profil méridien de la surface de roulement plat, c'est-à-dire avec un rayon de courbure moyen élevé, typiquement au moins égal à 1000 mm, ce qui facilite la mise à plat méridienne de la bande de roulement sur un sol rigide ou meuble, d'où une augmentation de la surface de contact entre la bande de roulement et le sol. Une telle augmentation de la surface de contact entraîne, en particulier sur un sol rigide, une diminution des pressions de contact et donc une augmentation de la durée de vie en usure, et, sur un sol meuble, une augmentation de la capacité de traction.

Encore plus avantageusement le rayon de courbure R_{C} au point milieu du profil méridien de la surface radialement extérieure de la partie médiane est au moins égal à 1.1 fois, de préférence à 1.2 fois, le rayon de courbure R_{S} au point milieu du profil méridien de la surface radialement extérieure de chaque partie latérale. Avec un rayon de courbure moyen du profil méridien de la surface de roulement encore plus élevé, la mise à plat méridienne de la bande de roulement est encore davantage facilitée.

Selon un premier mode de réalisation préféré, la partie médiane ayant un taux d'entaillement volumique médian TE_{C} égal au rapport entre le volume total des rainures séparant les éléments en relief de la partie médiane et le volume total de la partie médiane radialement compris entre la surface de fond et la surface de roulement, le taux d'entaillement volumique médian TE_{C} est au plus égal à 30%, de préférence au plus égal à 20%. Un tel taux d'entaillement volumique médian TE_{C} implique la présence d'un volume de matière minimal en contact avec le sol au niveau de la partie médiane, garantissant des performances en usure et en comportement sur route satisfaisants. La durée de vie vis-à-vis de l'usure est également augmentée du fait de la rigidité, et donc de la faible mobilité, des éléments en relief de la partie médiane. La résistance au roulement est diminuée grâce à la rigidité, et donc à la faible mobilité, des éléments en relief de la partie médiane.

Selon une variante du premier mode de réalisation préféré, chaque partie latérale ayant un taux d'entaillement volumique latéral TE_{S} égal au rapport entre le volume total des rainures séparant les éléments en relief de la partie latérale et le volume total de la partie latérale radialement compris entre la surface de fond et la surface de roulement, le taux d'entaillement volumique latéral TE_{S} est au moins égal à 50%, de préférence au moins égal à 60%. Un tel taux d'entaillement volumique latéral TE_{S} implique la présence d'un volume de rainures minimal au niveau des parties latérales, garantissant, en usage en champ, le cisaillement d'un volume minimal de terre minimal, ce qui implique une capacité de traction en champ satisfaisante.

Selon une autre variante du premier mode de réalisation préféré, la bande de roulement comprenant deux parties intermédiaires, chaque partie intermédiaire étant axialement délimitée par la partie médiane et une partie latérale, chaque partie intermédiaire ayant un taux d'entaillement volumique intermédiaire TE_{I} égal au rapport entre le volume total des rainures séparant les éléments en relief de la partie intermédiaire et le volume total de la partie intermédiaire radialement compris entre la surface de fond et la surface de roulement, le taux d'entaillement volumique intermédiaire TE_{I} est au moins égal à 50% et au plus égal à 75%. Un tel taux d'entaillement volumique intermédiaire TE_{I} implique la présence d'un volume de rainures minimal au niveau des parties intermédiaires, garantissant, en usage en champ, le cisaillement d'un volume minimal de terre minimal, ce qui implique une capacité de traction en champ satisfaisante.

Selon un deuxième mode de réalisation préféré, les éléments en relief de la partie médiane et de chaque partie latérale s'étendant radialement vers l'extérieur à partir de la surface de fond jusqu'à la surface de roulement sur une hauteur radiale H, tout élément en relief de la partie médiane comprend un premier mélange élastomérique s'étendant radialement vers l'intérieur à partir de la surface radialement extérieure sur une distance radiale au moins égale à 0.5 fois et au plus égale à 1 fois la hauteur radiale H et tout élément en relief de chaque partie latérale comprend un deuxième mélange élastomérique s'étendant radialement vers l'intérieur à partir de la surface radialement extérieure sur une distance radiale au moins égale à 0.5 fois et au plus égale à 1 fois la hauteur radiale H.

Ce deuxième mode de réalisation préféré de l'invention vise à obtenir une différenciation des performances de la bande de roulement entre la partie médiane constituée au moins en partie par un premier mélange élastomérique et destinée à résister à l'usure en usage routier, et les parties latérales latérales, constituées au moins en partie par un deuxième mélange élastomérique et destinées à résister aux agressions en usage en champ. Par conséquent, les premier et deuxième mélanges élastomériques sont avantageusement différents.

La partie médiane étant la partie de bande de roulement principalement soumise à usure, en usage routier à haute pression, tout élément en relief de la partie médiane comprend un premier mélange élastomérique s'étendant radialement vers l'intérieur à partir de la surface radialement extérieure sur une distance radiale au moins égale à 0.5 fois et au plus égale à 1 fois la hauteur radiale H, c'est-à-dire représentant 50% à 100% de la hauteur radiale H de l'élément en relief, ce premier mélange élastomérique étant avantageusement résistant à l'usure.

Les parties latérales étant les parties de bande de roulement principalement soumises aux agressions, en usage en champ à basse pression, tout élément en relief de chaque partie latérale comprend un deuxième mélange élastomérique s'étendant radialement vers l'intérieur à partir de la surface radialement extérieure sur une distance radiale au moins égale à 0.5 fois et au plus égale à 1 fois la hauteur radiale H, c'est-à-dire représentant 50% à 100% de l'élément en relief, ce deuxième mélange élastomérique, étant avantageusement résistant aux agressions en usage en champ.

Ce deuxième mode de réalisation préféré de l'invention a été décrit et revendiqué dans la demande internationale WO 2015158871, pour une sculpture à barrettes de pneumatique agricole. Ce document décrit en particulier des premier et deuxième mélanges élastomériques respectivement de partie médiane et de parties latérales, d'une part, par leurs modules complexes respectifs de cisaillement dynamique G₁* et G₂* à 50% de déformation et à 60°C, et par leurs facteurs de perte respectifs tan (δ₁) et tan (δ₂), et d'autre part, par leurs compositions chimiques respectives.

En ce qui concerne les parties intermédiaires de la bande de roulement, celles-ci peuvent comprendre seuls ou en combinaison les premier et deuxième mélanges élastomériques précédemment cités, ou comprendre un troisième mélange élastomérique.

La présente invention sera mieux comprise à l'aide des figures schématiques et non représentées à l'échelle, jointes en annexe :
- figure 1 : coupe méridienne d'une bande de roulement d'un pneumatique selon l'invention
- figure 2 : vue de dessus d'une bande de roulement d'un pneumatique selon l'invention
- figure 3A : schéma du contact avec un sol rigide d'un pneumatique selon l'invention utilisé à haute pression
- figure 3B : schéma du contact avec un sol rigide d'un pneumatique selon l'invention utilisé à basse pression.

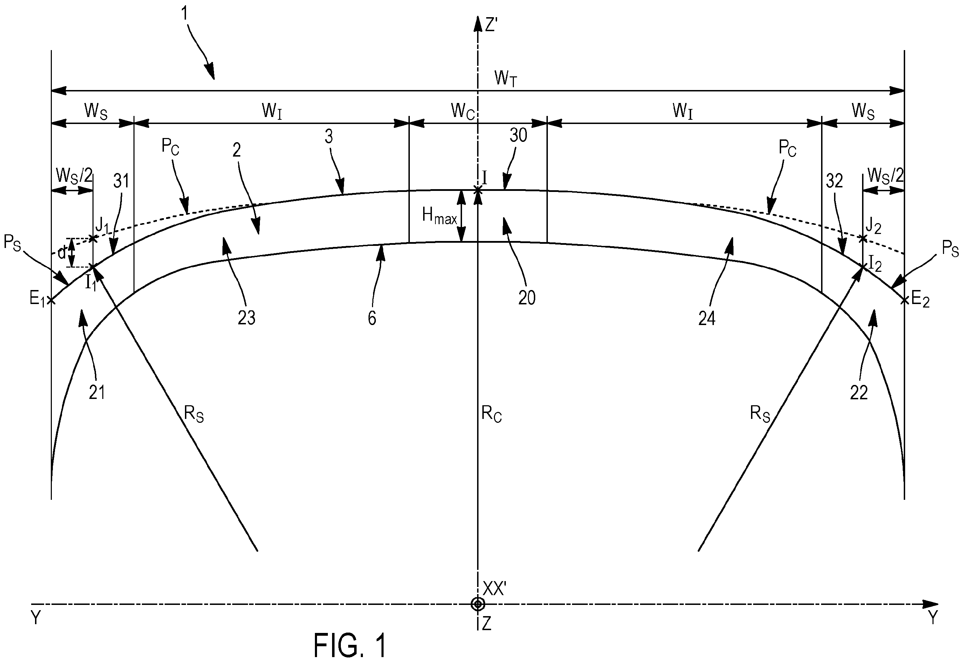

La figure 1 représente une coupe méridienne, dans un plan méridien YZ, d'un pneumatique 1 pour véhicule à usage agricole comprenant une bande de roulement 2, destinée à entrer en contact avec un sol par l'intermédiaire d'une surface de roulement 3. La bande de roulement 2 comprend des éléments en relief 4 séparés au moins en partie les uns des autres par des rainures 5 et s'étendant radialement vers l'extérieur à partir d'une surface de fond 6 jusqu'à la surface de roulement 3 sur une hauteur radiale H au moins égale à 30 mm et au plus égale à l'épaisseur radiale Hₘₐₓ de la bande de roulement 2. La bande de roulement 2 a une largeur totale W_{T} mesurée entre deux extrémités axiales (E₁, E₂) de la surface de roulement 3. La bande de roulement 2 comprend une partie médiane 20, symétrique par rapport à un plan équatorial XZ et ayant une largeur médiane Wc au moins égale à 5% et au plus égale à 25% de la largeur totale W_{T}, et deux parties latérales (21, 22) s'étendant chacune axialement vers l'intérieur à partir d'une extrémité axiale (E₁, E₂) de la surface de roulement 3 et ayant chacune une largeur latérale W_{S} au moins égale à 5% et au plus égale à 20% de la largeur totale W_{T}. La bande de roulement comprend en outre deux parties intermédiaires (23, 24), chaque partie intermédiaire (23, 24) étant axialement délimitée par la partie médiane 20 et une partie latérale (21, 22). La partie médiane 20 comprend une surface radialement extérieure 30 ayant, dans un plan méridien YZ, un profil méridien P_{C} ayant un point milieu I et un rayon de courbure R_{C} en son point milieu I. Chaque partie latérale (21, 22) comprend une surface radialement extérieure (31, 32) ayant un profil méridien P_{S} ayant un point milieu (I₁, I₂) et un rayon de courbure R_{S} en son point milieu (I₁, I₂). Selon l'invention, le profil méridien P_{S} de la surface radialement extérieure (31, 32) de chaque partie latérale (21, 22) est radialement intérieur au profil méridien P_{C} de la surface radialement extérieure 30 de la partie médiane 20. Egalement selon l'invention, la distance radiale d entre le point milieu (I₁, I₂) du profil méridien P_{S} de la surface radialement extérieure (31, 32) de chaque partie latérale (21, 22) et le profil méridien P_{C} de la surface radialement extérieure (30) de la partie médiane (20) est au moins égale à 0.5 fois l'épaisseur radiale Hₘₐₓ de la bande de roulement (2). Plus précisément, cette distance radiale d est mesurée entre le point milieu (I₁, I₂) du profil méridien P_{S} de la surface radialement extérieure (31, 32) de chaque partie latérale (21, 22) et le point (J₁, J₂), intersection entre la droite radiale de direction ZZ' passant par le point milieu (I₁, I₂) et le profil méridien P_{C} de la surface radialement extérieure 30 de la partie médiane 20.

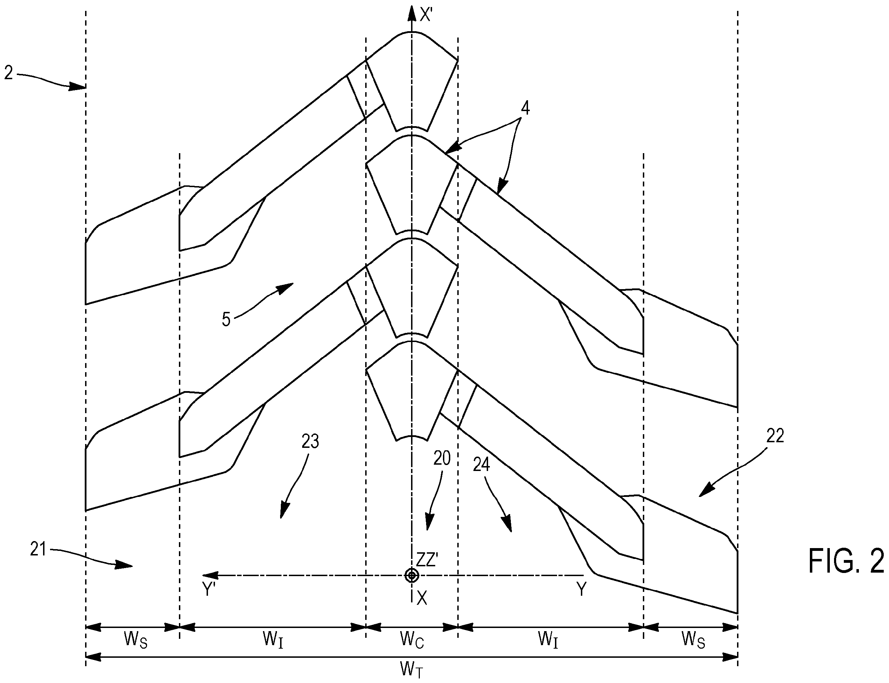

La figure 2 représente une vue de dessus d'une bande de roulement 2 d'un pneumatique selon l'invention. La bande de roulement 2, ayant une largeur totale W_{T}, comprend des éléments en relief 4 au moins en partie séparés les uns des autres par des sillons 5. La bande de roulement 2, ayant une largeur totale W_{T}, comprend une partie médiane 20 ayant une largeur médiane W_{C} au moins égale à 5% et au plus égale à 25% de la largeur totale W_{T}, deux parties latérales (21, 22) ayant une largeur latérale W_{S} au moins égale à 5% et au plus égale à 20%, et deux parties intermédiaires (23, 24) ayant une largeur latérale W_{I}. Dans le cas représenté, la partie médiane 20 est quasi-continue. Les parties intermédiaires (23, 24) sont en partie reliées à la partie médiane 20 par des pontages.

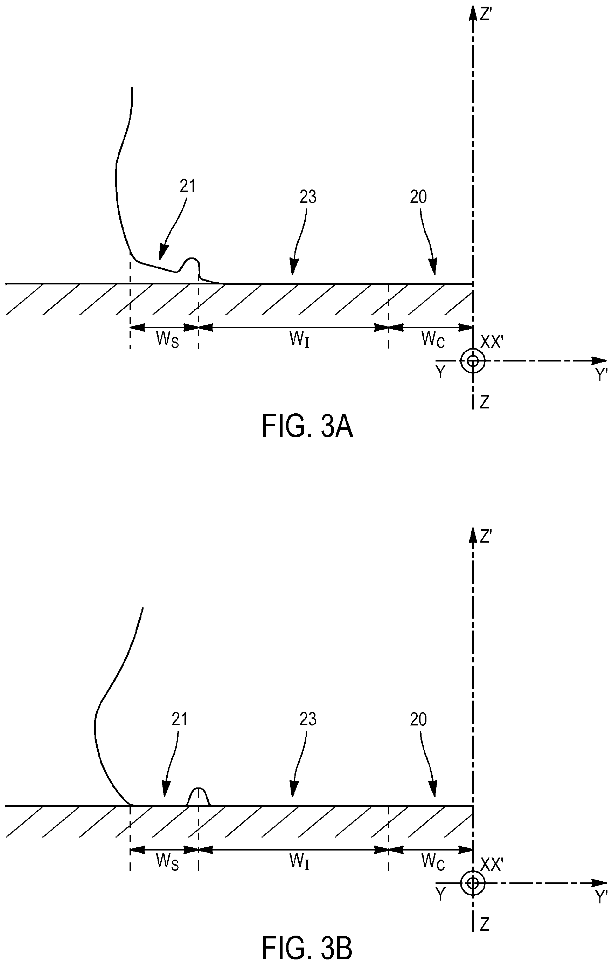

Les figures 3A et 3B représentent schématiquement le contact avec un sol rigide d'un pneumatique selon l'invention respectivement utilisé à haute pression et à basse pression. Sur la figure 3A, en usage à haute pression, c'est-à-dire à une pression de gonflage au moins égale à 2/3 de la pression recommandée, la surface radialement extérieure de la partie médiane de largeur médiane W_{C} est en contact total avec le sol, alors que les surfaces radialement extérieures des parties latérales de largeur latérale Ws ne sont pas en contact avec le sol, les surfaces radialement extérieures des parties intermédiaires entre chaque partie latérale et la partie médiane de largeur intermédiaire W_{I} étant en contact partiel avec le sol. En d'autres termes, la bande de roulement est en contact partiel avec le sol, par sa partie médiane essentiellement, et au moins partiellement par ses parties intermédiaires. Sur la figure 3B, en usage à basse pression, c'est-à-dire à une pression de gonflage au plus égale à 1/2 de la pression recommandée, les surfaces radialement extérieures respectives de la partie médiane de largeur médiane W_{C}, des parties intermédiaires de largeur intermédiaire W_{I} et des parties latérales de largeur latérale W_{S} sont en contact total avec le sol. En d'autres termes, la bande de roulement est en contact total avec le sol.

L'invention a été plus particulièrement étudiée pour un pneumatique agricole de dimension IF 710/70R42.

Les caractéristiques de conception de la bande de roulement du pneumatique selon l'invention étudié sont présentées dans le tableau 1 ci-dessous:

**Tableau 1**

| | |
|---|---|
| Largeur totale W_{T} de la bande de roulement (mm) | 738 mm |
| Largeur médiane W_{C} de la partie médiane (mm) | 106 mm |
| Largeur latérale W_{S} de chaque partie latérale (mm) | 236 mm |
| Largeur intermédiaire W_{I} de chaque partie intermédiaire (mm) | 80 mm |
| Epaisseur radiale Hₘₐₓ de la bande de roulement (mm) | 60 mm |
| Distance radiale d entre les profils radialement extérieurs respectifs des parties médiane et latérale (mm) | 40 mm |
| Rayon de courbure R_{C} moyen du profil radialement extérieur de la partie médiane (mm) | 1200 mm |
| Rayon de courbure R_{S} moyen du profil radialement extérieur de chaque partie latérale (mm) | 900 mm |
| Taux d'entaillement volumique médian TE_{C} (%) | 20% |
| Taux d'entaillement volumique latéral TE_{S} (%) | 60% |
| Taux d'entaillement volumique intermédiaire TE_{S} (%) | 75% |

En ce qui concerne les performances en usage sur route mesurées sur le pneumatique selon l'invention précédemment décrit, par rapport à celles d'un pneumatique de l'état de la technique, la durée de vie sur usure, représentant le kilométrage maximal parcouru, a été augmentée de 10% et la consommation en carburant a été réduite d'environ 10%, en raison de la diminution de la résistance au roulement.

En ce qui concerne les performances en usage en champ mesurées sur le pneumatique selon l'invention précédemment décrit, par rapport à celles d'un pneumatique de l'état de la technique, la capacité de traction, représentant la charge maximale pouvant être tractée, pour un niveau de glissement donné du pneumatique par rapport au sol, a été augmentée de 20% et la consommation en carburant a été réduite d'environ 10%, en raison de la diminution de la résistance à l'avancement.

L'invention peut être aisément extrapolée à un pneumatique dans lequel, par exemple et de manière non exhaustive:
- la bande de roulement a une épaisseur radiale Hₘₐₓ inférieure à 30 mm
- la bande de roulement comprend une partie médiane non symétrique par rapport au plan équatorial et/ou des parties intermédiaires de largeurs intermédiaires W_{I} différentes et/ou des parties latérales de largeurs latérales Ws différentes.

## Revendications

1. Pneumatique (1) pour véhicule à usage agricole comprenant une bande de roulement (2), destinée à entrer en contact avec un sol par l'intermédiaire d'une surface de roulement (3):
- la bande de roulement (2) comprenant des éléments en relief (4) séparés au moins en partie les uns des autres par des rainures (5) et s'étendant radialement vers l'extérieur à partir d'une surface de fond (6) jusqu'à la surface de roulement (3) sur une hauteur radiale H au moins égale à 30 mm et au plus égale à l'épaisseur radiale Hₘₐₓ de la bande de roulement (2),
- la bande de roulement (2) ayant une largeur totale W_{T} mesurée entre deux extrémités axiales (E₁, E₂) de la surface de roulement (3),
- la bande de roulement comprenant une partie médiane (20), symétrique par rapport à un plan équatorial (XZ) et ayant une largeur médiane Wc au moins égale à 5% et au plus égale à 25% de la largeur totale W_{T}, et deux parties latérales (21, 22) s'étendant chacune axialement vers l'intérieur à partir d'une extrémité axiale (E₁, E₂) de la surface de roulement (3) et ayant chacune une largeur latérale W_{S} au moins égale à 5% et au plus égale à 20% de la largeur totale W_{T},
- la partie médiane (20) comprenant une surface radialement extérieure (30) ayant, dans un plan méridien (YZ), un profil méridien (P_{C}) ayant un point milieu (I) et un rayon de courbure R_{C} en son point milieu (I), et chaque partie latérale (21, 22) comprenant une surface radialement extérieure (31, 32) ayant un profil méridien (P_{S}) ayant un point milieu (I₁, I₂) et un rayon de courbure R_{S} en son point milieu (I₁, I₂),
**caractérisé en ce que** le profil méridien (P_{S}) de la surface radialement extérieure (31, 32) de chaque partie latérale (21, 22) est radialement intérieur au profil méridien (P_{C}) de la surface radialement extérieure (30) de la partie médiane (20) **et en ce que** la distance radiale (d) entre le point milieu (I₁, I₂) du profil méridien (P_{S}) de la surface radialement extérieure (31, 32) de chaque partie latérale (21, 22) et le profil méridien (P_{C}) de la surface radialement extérieure (30) de la partie médiane (20) est au moins égale à 0.5 fois l'épaisseur radiale Hₘₐₓ de la bande de roulement (2).

2. Pneumatique (1) selon la revendication 1, **dans lequel** le rayon de courbure R_{C} au point milieu (I) du profil méridien (P_{C}) de la surface radialement extérieure (30) de la partie médiane (20) est au moins égal au rayon de courbure R_{S} au point milieu (I) du profil méridien (P_{S}) de la surface radialement extérieure (31, 32) de chaque partie latérale (21, 22).

3. Pneumatique (1) selon l'une des revendications 1 ou 2, **dans lequel** le rayon de courbure R_{C} au point milieu (I) du profil méridien (P_{C}) de la surface radialement extérieure (30) de la partie médiane (20) est au moins égal à 1.1 fois, de préférence à 1.2 fois, le rayon de courbure R_{S} au point milieu (I) du profil méridien (P_{S}) de la surface radialement extérieure (31, 32) de chaque partie latérale (21, 22).

4. Pneumatique (1) selon l'une quelconque des revendications 1 à 3, la partie médiane (20) ayant un taux d'entaillement volumique médian TE_{C} égal au rapport entre le volume total des rainures (5) séparant les éléments en relief (4) de la partie médiane (2) et le volume total de la partie médiane (20) radialement compris entre la surface de fond (6) et la surface de roulement (3), **dans lequel** le taux d'entaillement volumique médian TE_{C} est au plus égal à 30%, de préférence au plus égal à 20%.

5. Pneumatique (1) selon l'une quelconque des revendications 1 à 4, chaque partie latérale (21, 22) ayant un taux d'entaillement volumique latéral TE_{S} égal au rapport entre le volume total des rainures (5) séparant les éléments en relief (4) de la partie latérale (21, 22) et le volume total de la partie latérale (21, 22) radialement compris entre la surface de fond (6) et la surface de roulement (3), **dans lequel** le taux d'entaillement volumique latéral TE_{S} est au moins égal à 50%, de préférence au moins égal à 60%.

6. Pneumatique (1) selon l'une quelconque des revendications 1 à 5, la bande de roulement comprenant deux parties intermédiaires (23, 24), chaque partie intermédiaire (23, 24) étant axialement délimitée par la partie médiane (20) et une partie latérale (21, 22), chaque partie intermédiaire (23, 24) ayant un taux d'entaillement volumique intermédiaire TE_{I} égal au rapport entre le volume total des rainures (5) séparant les éléments en relief (4) de la partie intermédiaire (23, 24) et le volume total de la partie intermédiaire (23, 24) radialement compris entre la surface de fond (6) et la surface de roulement (3), **dans lequel** le taux d'entaillement volumique intermédiaire TE_{I} est au moins égal à 50% et au plus égal à 75%.

7. Pneumatique (1) selon l'une quelconque des revendications 1 à 6, les éléments en relief (4) de la partie médiane (20) et de chaque partie latérale (21, 22) s'étendant radialement vers l'extérieur à partir de la surface de fond (6) jusqu'à la surface de roulement (3) sur une hauteur radiale H, **dans lequel** tout élément en relief (4) de la partie médiane (20) comprend un premier mélange élastomérique s'étendant radialement vers l'intérieur à partir de la surface radialement extérieure (30) sur une distance radiale au moins égale à 0.5 fois et au plus égale à 1 fois la hauteur radiale H **et dans lequel** tout élément en relief (4) de chaque partie latérale (21, 22) comprend un deuxième mélange élastomérique s'étendant radialement vers l'intérieur à partir de la surface radialement extérieure (31, 32) sur une distance radiale au moins égale à 0.5 fois et au plus égale à 1 fois la hauteur radiale H.

## Patentansprüche

1. Reifen (1) für ein landwirtschaftliches Fahrzeug, umfassend einen Laufstreifen (2), der dazu bestimmt ist, über eine Lauffläche (3) mit einem Boden in Kontakt zu treten:
- wobei der Laufstreifen (2) Reliefelemente (4) umfasst, die durch Rillen (5) mindestens teilweise voneinander getrennt sind und sich von einer Bodenfläche (6) über eine radiale Höhe H von mindestens 30 mm und höchstens der radialen Dicke Hₘₐₓ des Laufstreifens (2) radial nach außen bis zur Lauffläche (3) erstrecken ,
- wobei der Laufstreifen (2) eine Gesamtbreite W_{T}, gemessen zwischen zwei axialen Enden (E₁, E₂) der Lauffläche (3), aufweist,
- wobei die Lauffläche einen mittleren Teil (20) umfasst, der in Bezug auf eine Äquatorialebene (XZ) symmetrisch ist und eine mittlere Breite W_{C} von mindestens 5 % und höchstens 25 % der Gesamtbreite W_{T} aufweist, und zwei seitliche Teile (21, 22), die sich jeder von einem axialen Ende (E₁, E₂) der Lauffläche (3) axial nach innen erstrecken und jeder eine seitliche Breite W_{S} von mindestens 5 % und höchstens 20 % der Gesamtbreite W_{T} aufweisen,
- wobei der mittlere Teil (20) eine radial äußere Fläche (30) umfasst, die in einer Meridianebene (YZ) ein Meridianprofil (P_{C}) mit einem Mittelpunkt (I) und einem Krümmungsradius R_{C} in seinem Mittelpunkt (I) aufweist, und wobei jeder seitliche Teil (21, 22) eine radial äußere Fläche (31, 32) umfasst, die ein Meridianprofil (P_{S}) mit einem Mittelpunkt (I₁, I₂) und einem Krümmungsradius R_{S} in seinem Mittelpunkt (I₁, I₂) aufweist,
**dadurch gekennzeichnet, dass** das Meridianprofil (P_{S}) der radial äußeren Fläche (31, 32) jedes seitlichen Teils (21, 22) radial innerhalb des Meridianprofils (P_{C}) der radial äußeren Fläche (30) des mittleren Teils (20) ist, und dadurch, dass der radiale Abstand (d) zwischen dem Mittelpunkt (I₁, I₂) des Meridianprofils (P_{S}) der radial äußeren Fläche (31, 32) jedes seitlichen Teils (21, 22) und dem Meridianprofil (P_{C}) der radial äußeren Fläche (30) des mittleren Teils (20) mindestens gleich dem 0,5-fachen der radialen Dicke Hₘₐₓ des Laufstreifens (2) ist.

2. Reifen (1) nach Anspruch 1, wobei der Krümmungsradius R_{C} am Mittelpunkt (I) des Meridianprofils (P_{C}) der radial äußeren Fläche (30) des mittleren Teils (20) mindestens gleich dem Krümmungsradius R_{S} am Mittelpunkt (I) des Meridianprofils (P_{S}) der radial äußeren Fläche (31, 32) jedes seitlichen Teils (21, 22) ist.

3. Reifen (1) nach einem der Ansprüche 1 oder 2, wobei der Krümmungsradius R_{C} am Mittelpunkt (I) des Meridianprofils (P_{C}) der radial äußeren Fläche (30) des mittleren Teils (20) mindestens gleich dem 1,1-fachen, vorzugsweise gleich dem 1,2-fachen, des Krümmungsradius R_{S} am Mittelpunkt (I) des Meridianprofils (P_{S}) der radial äußeren Fläche (31, 32) jedes seitlichen Teils (21, 22) ist.

4. Reifen (1) nach einem der Ansprüche 1 bis 3, wobei der mittlere Teil (20) einen mittleren volumenbezogenen Einschnittsgrad TE_{C} aufweist, der gleich dem Verhältnis ist zwischen dem Gesamtvolumen der Rillen (5), die die Reliefelemente (4) des mittleren Teils (2) trennen, und dem Gesamtvolumen des mittleren Teils (20), das radial zwischen der Bodenfläche (6) und der Lauffläche (3) enthalten ist, wobei der mittlere volumenbezogene Einschnittsgrad TE_{C} höchstens 30 %, vorzugsweise höchstens 20 %, beträgt.

5. Reifen (1) nach einem der Ansprüche 1 bis 4, wobei jeder seitliche Teil (21, 22) einen seitlichen volumenbezogenen Einschnittsgrad TE_{S} aufweist, der gleich dem Verhältnis ist zwischen dem Gesamtvolumen der Rillen (5), die die Reliefelemente (4) des seitlichen Teils (21, 22) trennen, und dem Gesamtvolumen des seitlichen Teils (21, 22), das radial zwischen der Bodenfläche (6) und der Lauffläche (3) enthalten ist, wobei der seitliche volumenbezogene Einschnittsgrad TE_{S} mindestens 50 %, vorzugsweise mindestens 60 %, beträgt.

6. Reifen (1) nach einem der Ansprüche 1 bis 5, wobei der Laufstreifen zwei intermediäre Teile (23, 24) umfasst, wobei jeder intermediäre Teil (23, 24) axial durch den mittleren Teil (20) und einen seitlichen Teil (21, 22) begrenzt ist, wobei jeder intermediäre Teil (23, 24) einen intermediären volumenbezogenen Einschnittsgrad TE_{I} aufweist, der gleich dem Verhältnis ist zwischen dem Gesamtvolumen der Rillen (5), die die Reliefelemente (4) vom intermediären Teil (23, 24) trennen, und dem Gesamtvolumen des intermediären Teils (23, 24), das radial zwischen der Bodenfläche (6) und der Lauffläche (3) enthalten ist, wobei der intermediäre volumenbezogene Einschnittsgrad TE_{I} mindestens 50 % und höchstens 75 % beträgt.

7. Reifen (1) nach einem der Ansprüche 1 bis 6, wobei sich die Reliefelemente (4) des mittleren Teils (20) und jedes seitlichen Teils (21, 22) von der Bodenfläche (6) über eine radiale Höhe H radial nach außen bis zur Lauffläche (3) erstrecken, wobei jedes Reliefelement (4) des mittleren Teils (20) ein erstes elastomeres Gemisch umfasst, das sich von der radial äußeren Fläche (30) über einen radialen Abstand von mindestens dem 0,5-fachen und höchstens dem 1-fachen der radialen Höhe H radial nach innen erstreckt, und wobei jedes Reliefelement (4) jedes seitlichen Teils (21, 22) ein zweites elastomeres Gemisch umfasst, das sich von der radial äußeren Fläche (31, 32) über einen radialen Abstand von mindestens dem 0,5-fachen und höchstens dem 1-fachen der radialen Höhe H radial nach innen erstreckt.

## Claims

1. Tyre (1) for a vehicle for agricultural use comprising a tread (2), intended to come into contact with the ground via a tread surface (3):
- the tread (2) comprising raised elements (4) separated from one another at least in part by grooves (5) running radially towards the outside from a bottom surface (6) as far as the tread surface (3) over a radial height H at least equal to 30 mm and at most equal to the radial thickness Hₘₐₓ of the tread (2),
- the tread (2) having a total width W_{T} measured between two axial ends (E₁, E₂) of the tread surface (3),
- the tread comprising a middle part (20), symmetrical about an equatorial plane (XZ) and having a middle width W_{C} at least equal to 5% and at most equal to 25% of the total width W_{T}, and two lateral parts (21, 22), each extending axially inwards from an axial end (E₁, E₂) of the tread surface (3) and each having a lateral width W_{S} at least equal to 5% and at most equal to 20% of the total width W_{T},
- the middle part (20) comprising a radially outer surface (30) having, in a meridian plane (YZ), a meridian profile (P_{C}) having a midpoint (I) and a radius of curvature R_{C} at its midpoint (I), and each lateral part (21, 22) comprising a radially outer surface (31, 32) having a meridian profile (P_{S}) having a midpoint (I₁, I₂) and a radius of curvature R_{S} at its midpoint (I₁, I₂),
**characterized in that** the meridian profile (P_{S}) of the radially outer surface (31, 32) of each lateral part (21, 22) is radially on the inside of the meridian profile (P_{C}) of the radially outer surface (30) of the middle part (20) **and in that** the radial distance (d) between the midpoint (I₁, I₂) of the meridian profile (P_{S}) of the radially outer surface (31, 32) of each lateral part (21, 22) and the meridian profile (P_{C}) of the radially outer surface (30) of the middle part (20) is at least equal to 0.5 times the radial thickness Hₘₐₓ of the tread (2).

2. Tyre (1) according to Claim 1, **in which** the radius of curvature R_{C} at the midpoint (I) of the meridian profile (P_{C}) of the radially outer surface (30) of the middle part (20) is at least equal to the radius of curvature R_{S} at the midpoint (I) of the meridian profile (P_{S}) of the radially outer surface (31, 32) of each lateral part (21, 22).

3. Tyre (1) according to either of Claims 1 and 2, **in which** the radius of curvature R_{C} at the midpoint (I) of the meridian profile (P_{C}) of the radially outer surface (30) of the middle part (20) is at least equal to 1.1 times, preferably 1.2 times, the radius of curvature R_{S} at the midpoint (I) of the meridian profile (P_{S}) of the radially outer surface (31, 32) of each lateral part (21, 22).

4. Tyre (1) according to any one of Claims 1 to 3, the middle part (20) having a middle voids volume ratio TE_{C} equal to the ratio between the total volume of the grooves (5) separating the raised elements (4) of the middle part (2) and the total volume of the middle part (20) comprised radially between the bottom surface (6) and the tread surface (3), **in which** the middle voids volume ratio TE_{C} is at most equal to 30%, preferably at most equal to 20%.

5. Tyre (1) according to any one of Claims 1 to 4, each lateral part (21, 22) having a lateral voids volume ratio TE_{S} equal to the ratio between the total volume of the grooves (5) separating the raised elements (4) of the lateral part (21, 22) and the total volume of the lateral part (21, 22) comprised radially between the bottom surface (6) and the tread surface (3), **in which** the lateral voids volume ratio TE_{S} is at least equal to 50%, preferably at least equal to 60%.

6. Tyre (1) according to any one of Claims 1 to 5, the tread comprising two intermediate parts (23, 24), each intermediate part (23, 24) being axially delimited by the middle part (20) and one lateral part (21, 22), each intermediate part (23, 24) having an intermediate voids volume ratio TE_{I} equal to the ratio between the total volume of the grooves (5) separating the raised elements (4) of the intermediate part (23, 24) and the total volume of the intermediate part (23, 24) comprised radially between the bottom surface (6) and the tread surface (3), **in which** the intermediate voids volume ratio TE_{I} is at least equal to 50%, and at most equal to 75%.

7. Tyre (1) according to any one of Claims 1 to 6, the raised elements (4) of the middle part (20) and of each lateral part (21, 22) extending radially outwards from the bottom surface (6) out to the tread surface (3) over a radial height H, **in which** any raised element (4) of the middle part (20) comprises a first elastomer compound extending radially towards the inside from the radially outer surface (30) over a radial distance at least equal to 0.5 times and at most equal to 1 times the radial height H **and in which** any raised element (4) of each lateral part (21, 22) comprises a second elastomer compound extending radially inwards from the radially outer surface (31, 32) over a radial distance at least equal to 0.5 times and at most equal to 1 times the radial height H.
